# EUROPÄISCHE PATENTSCHRIFT

(11) **EP 2 548 824 B1**
(45) Veröffentlichungstag und Bekanntmachung des Hinweises auf die Patenterteilung: **07.08.2013**
(21) Anmeldenummer: 12188685.7
(22) Anmeldetag: 25.01.2006
(51) Int. Cl.: B65G 47/84, B67C 3/24

(54) **Klammergreifer für ein Gefäßtransportsystem**
Clamp gripper for a container transport system
Pince de fixation pour un système de transport de récipients

(30) Priorität: 23.02.2005 DE 202005002924 U
(43) Veröffentlichungstag der Anmeldung: 23.01.2013
(62) Teilanmeldung aus: 06704083.2
(73) Patentinhaber: Krones AG, 93073 Neutraubling (DE)
(72) Erfinder: Knieling, Erwin, 93102 Pfatter (DE); Neumayer, Walter, 93086 Wörth an der Donau (DE)
(74) Vertreter: Grünecker, Kinkeldey, Stockmair & Schwanhäusser

(56) Entgegenhaltungen:
- EP-A- 1 375 395
- JP-A- 2 190 229
- SU-A1- 1 007 968

## Beschreibung

Die Erfindung betrifft einen Klammergreifer der im Oberbegriff des Anspruchs 1 angegebenen Art.

Zwischen den Freigabe- und Greifstellungen rein mechanisch gesteuerte Klammergreifer sind beispielsweise aus EP 0 659 683 A bekannt. Der bauliche Aufwand für die mechanische Steuerung ist hoch.

Unter Verwendung eines Kraftspeichers mechanisch gesteuerte Klammergreifer sind aus DE 297 13 510 U bekannt. Der Kraftspeicher ist z.B. eine zwischen den Greiferarmen wirkungsmäßig eingesetzte Spiral- oder Schraubendruckfeder. Der Klammergreifer wird gegen die in Richtung zur Freigabestellung wirkende Kraft des Kraftspeichers, z.B. eine Gummifeder, durch einen drehbaren Steuernocken in die Greifstellung und zurück verstellt.

Weiterer Stand der Technik ist zu finden in SU 1 007 968 A1, JP 2 190229 A und EP 1 375 395 A.

Behältertransportsysteme, insbesondere Flaschen-Transportsysteme müssen hohe Anforderungen hinsichtlich der mikrobiologischen Verhältnisse und der Reinigung erfüllen, und dabei über lange Standzeiten und für sehr hohe Arbeitsfrequenzen betriebssicher sein. Körperliche Federn wie Spiralfedern oder Gummifedern oder dgl., die in der Nähe des Greifbereiches, d.h. nahe bei den ergriffenen Behältern positioniert werden, sind im Hinblick auf die Mikrobiologie und die Reinigung kritisch, weil sich dort kleine Verschmutzungen leicht absetzen, sind ferner häufig anfällig gegen aggressive Reinigungsmedien, die die Feder-Standzeit verkürzen, und können jederzeit mechanisch beschädigt werden oder brechen, wodurch die Funktionsfähigkeit des Klammergreifers beeinträchtigt wird oder verloren geht (große Gefahr, Behälter zu beschädigen). Außerdem können die Federn beim Arbeiten Abrieb oder Inhaltsstoffe absondern.

Es ist in der Flaschentransport-Technik schon vorgeschlagen worden, bei gesteuerten Mehrfachgelenks-Klammergreifern einen Zuhalte-Mechanismus mit einander anziehenden Permanentmagneten vorzusehen. Einander anziehende Permanentmagnete können zu dem Problem führen, dass sie bei Berührung oder extremer Annäherung eine extrem hohe Löse- oder Losbrechkraft erfordern, die zu einer unerwünschten Schnappbewegung des Klammergreifers und zu extrem hohen mechanischen Belastungen führen kann.

Aus EP 1 375 395 A ist ein über Nocken gesteuerter Klammergreifer bekannt, dessen beide Greiferarme in einer schwenkbaren Haltegabel um getrennte Achsen schwenkbar sind. Die über die Achsen hinausstehenden starren Verlängerungen der Greiferarme sind jeweils an einem Schwenkglied angelenkt. Die beiden Schwenkglieder haben etwa dreieckige Form und sind schwenkbeweglich über einen Zapfen gekoppelt, an welchem ein Steuernocken drehbar angeordnet ist, und der von einem mit der Haltegabel verbundenen Stößel durchsetzt wird. In jedem Schwenkglied ist ein Permanentmagnet angeordnet, der kurz vor oder bei Erreichen der Greifstellung der Greiferarme eine Anzugskraft zum Ende des Stößels entwickelt. In der Freigabestellung sind die Permanentmagneten so weit voneinander entfernt, dass sie keine gegenseitige Kraftwirkung mehr ausüben.

Aus SU 1007968 A1 ist ein gesteuerter Klammergreifer für Objekte bekannt, dessen Greiferarme an über die Achsen hinausstehenden Verlängerungen Permanentmagneten tragen. Diese Permanentmagneten weisen gegensinnige Polungen auf, d.h. der Nordpol des einen Permanentmagneten wirkt magnetisch mit dem Südpol des anderen Permanentmagneten zusammen, um die Greiferarme über eine Anziehungskraft in der Freigabestellung zu halten. Um die Greiferarme in die Greifstellung zu bringen, wird bei einer Ausführungsform ein aus zwei gegensinnig gepolten Permanentmagneten bestehender Keil mittels eines Hilfsantriebs zwischen keilförmige Aufdrückflächen der Permanentmagneten an den Greiferarm-Verlängerungen eingeschoben, um zunächst die Haftwirkung zwischen den Permanentmagneten an den Greiferarm-Verlängerungen mechanisch zu brechen, und dann unterstützt von magnetischen Abdrückkräften die Greiferarme in die Greifstellung zu schwenken. Um die Greiferarme dieser Ausführungsform wieder in die Freigabestellung zu bringen, wird das Paar keilförmiger Permanentmagneten mittels des Hilfsantriebs wieder zurückgezogen, damit die an den Greiferarm-Verlängerungen angeordneten gegensinnig gepolten Permanentmagneten einander wieder anziehen und die Greiferarme auseinanderschwenken. In der anderen Ausführungsform ist zwischen den an den Greiferarm-Verlängerungen angeordneten, gegensinnig gepolten Permanentmagneten eine Magnetspule platziert, die zum Einstellen der Greifstellung strombeaufschlagt wird und die beiden zunächst aneinander haftenden Permanentmagneten an den Greiferarm-Verlängerungen gegen deren Anziehkräfte auseinanderdrückt.

Der Erfindung liegt die Aufgabe zugrunde, einen funktionssicheren, leicht zu reinigenden, und höchste Anforderungen in mikrobiologischer Hinsicht erfüllenden gesteuerten Klammergreifer anzugeben.

Die gestellte Aufgabe wird mit den Merkmalen des Anspruchs 1 gelöst.

Die im Kraftspeicher einander abstoßenden Permanentmagneten an den Greiferarmen wirken als virtuelle Feder ohne körperliche Verbindung, wobei sich die Federcharakteristik durch die Auslegung der Permanentmagneten vorbestimmen und optimieren lässt. Die Kraftentwicklung erfolgt ohne spürbaren Losbrechruck, d.h. die Abstoßkraft nimmt von einem Maximum bei maximaler Annäherung der Permanentmagneten entsprechend der Federcharakteristik ab, wenn sich die Permanentmagneten voneinander wegbewegen. Dies ist eine für Klammergreifer optimale Kraftcharakteristik. Die wesentlichen Vorteile der virtuellen, aus den sich abstoßenden Permanentmagneten gebildeten Feder bei einem Klammergreifer sind jedoch die Bruchsicherheit, das Arbeiten ohne Abrieb, die Möglichkeit, Hinterschneidungen, Winkel oder dgl. zu vermeiden, die das Festsetzen von Keimen oder Verunreinigungen begünstigen könnten, und die Unempfindlichkeit gegen gegebenenfalls aggressive Reinigungsmedien, gepaart mit minimalem Platzbedarf. Permanentmagneten sind in verschiedensten Spezifikationen und Formen mit hoher Leistungsfähigkeit kostengünstig erhältlich, was für Klammergreifer deshalb wichtig ist, weil in einem Behälter-Transportsystem eine sehr große Anzahl Klammergreifer, beispielsweise 300 oder mehr, eingesetzt werden kann.

Um bei möglichst kleinem Volumen eine hohe Leistung, einen optimierten Abstoßkraftverlauf, und selbst bei voneinander separierten Permanentmagneten noch eine wenn auch niedrigere Abstoßkraft zu erzielen, ist es zweckmäßig, wenn die Permanentmagneten überwiegend seltene Erden enthalten oder aus seltenen Erden hergestellt sind. Hierfür sind z.B. Neodym oder Samarium zweckmäßig, oder auch chemische Elemente der dritten Gruppe des Periodensystems sowie Lanthanoide. Solche Permanentmagneten zeichnen sich durch eine sehr hohe Leistungsdichte pro Flächen- oder Volumeneinheit aus.

Um Absetzräume für Keime und Verunreinigungen und schädliche Einflüsse gegebenenfalls aggressiver und mit hohem Druck eingesetzter Reinigungsmittel zu vermeiden, ist es zweckmäßig, jeden Permanentmagneten in nicht magnetisches Material einzukapseln. Hierfür eignet sich besonders Edelstahl, der sich leicht keimfrei halten lässt.

Bei einer zweckmäßigen Ausführungsform werden die Permanentmagneten direkt an den Greiferarmen angeordnet, vorzugsweise in etwa in der Mitte zwischen dem jeweiligen Greifbereich und der Achse des Greiferarms. Die Permanentmagneten beaufschlagen die Greiferarme voneinander weg und öffnen beispielsweise den Klammergreifer mit einer anfänglich sehr hohen und dann graduell nachlassenden Abstoßkraft. Diese Abstoßkraft wirkt günstig nahe dem Greifbereich der Greiferarme, d.h. nahe dem ergriffenen Behälter. Die Position der Permanentmagneten wie auch ihre Anzahl kann jedoch in Anpassung an die Verhältnisse, wie den relativen Verstellbereich der Greiferarme und dgl., variiert werden.

Grundsätzlich kann jeder Permanentmagnet zweckmäßig zylinderförmig und in einem Kapselgehäuse geborgen sein.

Das Kapselgehäuse ist ein Topf, beispielsweise aus Edelstahl, mit einem dünnen Topfboden, dem die Abstoßfläche des Permanentmagneten gegenüberliegt, während die offene Seite des Topfes durch einen Deckel verschlossen ist, der zweckmäßig eingeschweißt ist.

Zwischen dem Deckel und dem Permanentmagneten kann eine Füllscheibe eingesetzt sein, beispielsweise um mit einer Kapselgehäusegröße unterschiedlich große Permanentmagneten verwenden zu können, oder um den Permanentmagneten gegen den Einfluss der Schweißwärme beim Verschweißen des Deckels zu schützen.

Bei einer weiteren, vorteilhaften Ausführungsform eines mechanisch gesteuerten Klammergreifers wirkt zwischen Verlängerungen der Greiferarme der drehbare Steuernocken, um die Greiferarme zwischen der Greifstellung und der Freigabestellung hin- und herzuverstellen. Die Abstoßkraft der Permanentmagneten wirkt in Richtung zur Freigabestellung und hält die Verlängerungen in Kontakt mit dem Steuernocken. Bei dieser Ausführungsform können die Permanentmagneten, die Zylinderform haben, in Kapselgehäusen geborgen sein, die mit Haltefüßen in den Greiferarmen festgelegt sind. Um genügend Einbauraum für die Kapselgehäuse zu schaffen, sind zweckmäßig die Innenseiten der Greiferarme mit Vertiefungen versehen.

Bei dieser Ausführungsform ist es zweckmäßig, wenn in der Behälter-Greifstellung ein erster Luftspalt zwischen den Permanentmagneten vorgesehen ist, so dass sich diese nahezu mit der maximalen Abstoßkraft abstoßen. Hingegen ist der Klammergreifer bei Abwesenheit eines Behälters in eine extreme Schließstellung bringbar, in der ein zweiter, jedoch kleinerer Luftspalt zwischen dem Permanentmagneten oder deren Kapselgehäusen und damit die größte Abstoßkraft vorliegt.

Um die Kraftwirkung der Permanentmagneten an den jeweiligen Einsatzfall besser anpassen zu können, kann es zweckmäßig sein, die Haltefüße in den Aufnahmen der Greiferarme verstellbar anzuordnen.

Um mit dem Klammergreifer Behälter sicher greifen zu können, zwischen denen Maßabweichungen vorliegen, ist es zweckmäßig, wenn zwischen den Verlängerungen und dem Steuernocken Kompensationsdruckfederkissen und/oder Kompensations-Blattfederelemente vorgesehen sind. Das Gesamtkonzept hat dadurch den Vorteil, in praktisch jeder Relativstellung der Greiferarme ein federnd vorgespanntes System ohne Spielbewegungen zu bilden.

Anhand der Zeichnung werden Ausführungsformen des Erfindungsgegenstandes erläutert. Es zeigen:
- Fig. 1: einen mechanisch gesteuerten Klammergreifer in einer Freigabestellung, in Draufsicht,
- Fig. 2: den Klammergreifer von Fig. 1 in der Behälter-Greifstellung, und
- Fig. 3: den Klammergreifer von Fig. 1 und Fig. 2 in einer extremen Schließstellung.

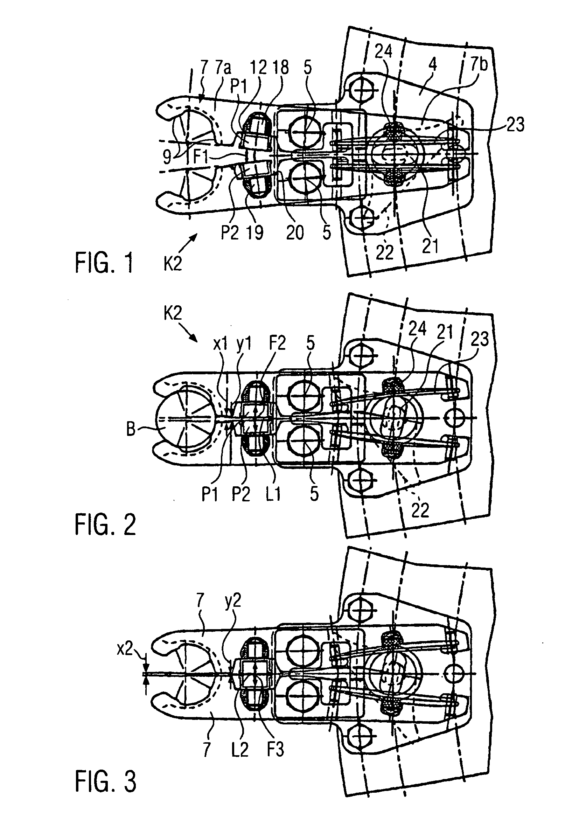

Die Fig. 1, 2 und 3 zeigen Draufsichten auf einen mechanisch gesteuerten Klammergreifer K2 in der Freigabestellung (Fig. 1), der Behälter-Greifstellung (Fig. 2) und einer extremen Schließstellung (Fig. 3) bei Abwesenheit eines Behälters B.

Der Klammergreifer K2 weist zwei im Wesentlichen spiegelbildliche Greiferarme 7 auf, die um in dieser Ausführungsform getrennte Achsen 5 gegensinnig schwenkbar sind und über die Achsen 5 hinaus verlaufende Verlängerungen 7b haben. Die Achsen 5 sitzen auf einer Tragplatte 4, die an einer Tragstruktur markiert sein kann. Die Greiferarme 7 schwenken um die Achsen 5 im Wesentlichen parallel zur Ebene der Oberseite der Tragplatte 4. Der Klammergreifer K2 wird durch einen drehbaren Steuernocken 21 gesteuert, der mittels eines Antriebsnockens 22 entweder hin und her oder durchgehend drehbar ist und zwischen den Innenseiten der Verlängerungen 7b arbeitet. Zwischen dem Steuernocken 21 und den Innenseiten der Verlängerungen 7b sind ferner am Steuernocken 21 anliegende Blattfedern 23 vorgesehen, und gegebenenfalls Druckfederkissen 24. Die Blattfedern 23 und/oder die Druckfederkissen 24 verleihen dem Antriebssystem des Klammergreifers K2 eine Eigenfederung und einen permanenten Kraftübertragungs-Kontakt mit dem Steuernocken 21 und kompensieren eventuelle Maßabweichungen unter den zu ergreifenden Behältern B.

An den Innenseiten der Greiferarme 7 sind zwischen den Greifbereichen 9 und den Achsen 5 Permanentmagneten P1, P2 als Paar vorgesehen, die einander abstoßen. Gegebenfalls kann mehr als nur ein Paar Permanentmagneten P1, P2 vorgesehen sein.

Jeder Permanentmagnet P1, P2 ist zweckmäßig in einem Kapselgehäuse 12 geborgen, das mit einem Fußteil 18 in einer Aufnahme 19 festgelegt ist. Um ein großes nutzbares Magnetvolumen unterzubringen, sind zweckmäßig die Innenseiten der Greiferarme 7 mit Vertiefungen 20 geformt. Gegebenenfalls sind die Fußteile 18 in den Aufnahmen 19 verstellbar.

Das Kapselgehäuse 12 ist beispielsweise ein Edelstahl-Topf mit einem dünnwandigen Topfboden und einer offenen Oberseite. Der Permanentmagnet P1 hat beispielsweise die Form eines Zylinders mit ebenen Abstoßseite und ist vollständig im Kapselgehäuse 12 untergebracht. Die offene Seite des Topfes kann durch einen Edelstahldeckel 16 verschlossen sein, der beispielsweise eingeschweißt ist. Zwischen dem Deckel und dem Permanentmagneten P1 kann eine Füllscheibe vorgesehen werden.

In der in Fig. 1 gezeigten Freigabestellung ist der ovale oder elliptische Steuernocken 21 in einer Drehposition, in der die Verlängerungen 7b einander maximal angenähert sind. Die beiden Permanentmagneten P1, P2 sind voneinander entfernt und beaufschlagen einander mit einer Abstoßkraft F1. Dabei schließen die ebenen Abstoßflächen der Permanentmagneten P1, P2 miteinander einen spitzen Winkel ein, der sich in Richtung von den Achsen 5 weg öffnet.

In der in Fig. 2 gezeigten Behälter-Greifstellung des Klammergreifers K2 ist der Steuernocken 21 so verdreht, dass er im Wesentlichen mit seiner größten Dimension zwischen den Verlängerungen 7b wirkt und die Blattfedern 23 sowie die Druckfederkissen 24 geringfügig deformiert und den Behälter B mit einer vorbestimmten Greifkraft hält. Die Permanentmagneten P1, P2 sind einander angenähert, so dass zwischen ihnen ein Luftspalt L1 mit einer Dimension beispielsweise y1 vorliegt und eine relativ große Abstoßkraft F2 wirksam ist. Die beiden Greiferarme 7 sind einander bis auf ein Spaltmaß x1 angenähert.

In der in Fig. 3 gezeigten extremen Schließstellung des Klammergreifers K2 sind bei Abwesenheit eines Behälters B die Greiferarme 7 einander bis auf ein Spaltmaß x2 angenähert, das kleiner ist als das Spaltmaß x1, und sind auch die beiden Permanentmagneten bis auf einen kleineren Luftspalt y2 als der Luftspalt y1 einander angenähert. Es wirkt die maximale Abstoßkraft F3.

Bei den gezeigten Ausführungsformen könnten die Greiferarme 7 auch auf einer gemeinsamen Achse schwenkbar gelagert sein. Ferner könnten die Abstoßflächen A der Permanentmagneten P1, P2 jedes Paares gegebenenfalls konvex gerundet sein, um eine andere Verlaufscharakteristik der Abstoßkraft zu erzielen. Bei der in den Fig. 1 bis 3 gezeigten Ausführungsform könnten die Permanentmagneten P1 auch direkt in den Greiferarmen eingebettet sein, vorausgesetzt, das Material der Greiferarme 7 ist nicht magnetisch, z.B. Edelstahl. Ferner ist es möglich, nur einen Greifarm 7 schwenkbar zu lagern und den anderen an der Tragstruktur oder Tragplatte 4 zu fixieren.

## Patentansprüche

1. Klammergreifer (K1, K2) für ein Gefäß-Transportsystem, insbesondere für ein Flaschen-Transportsystem, mit zwei je einen Greifbereich (9) aufweisenden Greiferarmen (7), die um eine oder um zwei Achsen (5) zwischen einer Greifstellung und einer Freigabestellung durch einen Steuernocken (21) mechanisch gesteuert schwenkbar und in Richtung zur Freigabestellung durch einen Kraftspeicher federnd beaufschlagt sind, **dadurch gekennzeichnet, dass** der Kraftspeicher mindestens ein Paar einander abstoßender Permanentmagnete (P1, P2) an den Greiferarmen (7) aufweist.

2. Klammergreifer nach Anspruch 1, **dadurch gekennzeichnet, dass** die Permanentmagneten (P1, P2) zumindest überwiegend seltene Erden enthalten, wie z.B. Neodym, Samarium, oder dgl.

3. Klammergreifer nach Anspruch 1, **dadurch gekennzeichnet, dass** jeder Permanentmagnet (P1, P2) in nicht-magnetisches Material, vorzugsweise Edelstahl, eingekapselt ist.

4. Klammergreifer nach Anspruch 1, **dadurch gekennzeichnet, dass** von den Permanentmagneten (P1, P2) des Paares jeweils einer direkt an einem Greiferarm (7) in etwa in der Mitte zwischen dem Greifbereich (9) und der Achse (5) angeordnet ist.

5. Klammergreifer nach Anspruch 3, **dadurch gekennzeichnet, dass** jeder Permanentmagnet (P1, P2) zylinderförmig und in einem am Greiferarm (7) befestigten Kapselgehäuse (12) geborgen ist.

6. Klammergreifer nach wenigstens einem der Ansprüche 1 bis 5, **dadurch gekennzeichnet, dass** der Klammergreifer (K2) durch einen zwischen Verlängerungen (7b) der um getrennte Achsen (5) an einer Tragplatte (4) schwenkbaren Greiferarme (7) drehbaren Steuernocken (21) gesteuert ist und durch die in Richtung zur Freigabestellung wirkende Abstoßkraft (F1, F2, F3) zwischen den an den Greiferarmen (7) zwischen den Greifbereichen (9) und den Achsen (5) angeordneten Permanentmagneten (P1, P2) mit den Verlängerungen (7b) im Kontakt mit dem Steuernocken (21) haltbar ist.

7. Klammergreifer nach Anspruch 6, **dadurch gekennzeichnet, dass** jeder Permanentmagnet (P1, P2) zylindrisch und in einem Kapselgehäuse (12) geborgen ist, das mit einem Haltefuß (18) in einer Aufnahme (19) an der Innenseite des Greiferarms (7) sitzt, vorzugsweise im Grund einer Vertiefung (20) in der Innenseite des Greiferarms (7).

8. Klammergreifer nach Anspruch 7, **dadurch gekennzeichnet, dass** der Haltefuß (18) in der Aufnahme (19) verstellbar angeordnet ist.

9. Klammergreifer nach Anspruch 6, **dadurch gekennzeichnet, dass** in der Behälter-Greifstellung zwischen den Permanentmagneten (P1, P2) ein erster Luftspalt (L1) vorgesehen ist, und dass in einer bei Abwesenheit eines Behälters (B) extremen Schließstellung des Klammergreifers (K2) zwischen den Permanentmagneten (P1, P2) ein zweiter Luftspalt (L2) kleiner als der erste Luftspalt (L1) vorgesehen ist.

10. Klammergreifer nach Anspruch 6, **dadurch gekennzeichnet, dass** zwischen den Verlängerungen (7b) und dem Steuernocken (21) Kompensations-Druckfeder-Kissen (24) und/oder Kompensations-Blattfederelemente (23) vorgesehen sind.

11. Klammergreifer nach einem der Ansprüche 1 bis 10, **dadurch gekennzeichnet, dass** ein Greiferarm (7) schwenkbar und der andere Greiferarm (7) und mindestens ein Permanentmagnet (P1, P2) an einer Tragplatte (4) einer Tragstruktur fixiert sind.

## Claims

1. Clamp gripper (K1, K2) for a container transport system, particularly for a bottle transport system, comprising two gripper arms (7) respectively having a gripping region (9), which gripper arms (7) are mechanically controlled by a control cam (21) to pivot about a single or about two axes (5) between a gripping position and a release position and which are biased resiliently by a force accumulator in a direction towards the release position, **characterised in that** the force accumulator comprises at least one pair of mutually repelling permanent magnets (P1, P2) at the gripper arms (7).

2. Clamp gripper according to claim 1, **characterised in that** the permanent magnets (P1, P2) at least predominantly contain rare earth like e.g. neodymium, samarium or the like.

3. Clamp gripper according to claim 1, **characterised in that** each permanent magnet (P1, P2) is encapsulated into non-magnetic material, preferably stainless steel.

4. Clamp gripper according to claim 1, **characterised in that** among the permanent magnets (P1, P2) of a pair, a respective one is arranged directly at a gripper arm (7) substantially in the centre between the gripping region (9) and the axis (5).

5. Clamp gripper according to claim 3, **characterised in that** each permanent magnet (P1, P2) has the shape of a cylinder and is accommodated in an encapsulating housing (12) which is secured to the gripper arm (7).

6. Clamp gripper according to at least one of claims 1 to 5, **characterised in that** the clamp gripper (K2) is controlled by a control cam (21) which is rotatable between extensions (7b) of the gripper arms (7), which gripper arms (7) are pivotable at a carrier plate (4) about separated axes (5), and that the clamp gripper can be held with the extensions (7b) in contact with the control cam (21) by the repelling force (F1, F2, F3) acting between the permanent magnets (P1, P2) which are arranged at the gripper arms (7) between the gripping regions (9) and the axes (5), which repelling force (F1, F2, F3) is acting in the direction towards the release position.

7. Clamp gripper according to claim 6, **characterised in that** each permanent magnet (P1, P2) is cylindrical and is accommodated in an encapsulating housing (12) which is seated with a holding foot (18) in a socket (19) at the inner side of the gripper arm (7), preferably is seated in the bottom of a recess (20) provided in the inner side of the gripper arm (7).

8. Clamp gripper according to claim 7, **characterised in that** the holding foot (18) is adjustably arranged in the socket (19).

9. Clamp gripper according to claim 6, **characterised in that** a first air gap (L1 ) is provided between the permanent magnets (P1, P2) in the container gripping position, and that in an extreme closing position of the clamp gripper (K2) in absence of a container (B) a second air gap (L2) is formed between the permanent magnets (P1, P2), which second air gap (L2) is smaller than the first air gap (L1).

10. Clamp gripper according to claim 6, **characterised in that** compensating compression spring cushions (24) and/or compensating leaf spring elements (23) are provided between the extensions (7b) and the control cam (21).

11. Clamp gripper according to one of claims 1 to 10, **characterised in that** at a carrier plate (4) of a carrying structure one gripper arm (7) is arranged in pivotable fashion and the other gripper arm (7) and at least one permanent magnet (P1, P2) is arranged in fixed fashion.

## Revendications

1. Pince de saisie (K1, K2) pour un système de transport de récipients, en particulier pour un système de transport de bouteilles, avec deux bras de saisie (7) comportant chacun une zone de saisie (9), qui peuvent pivoter par commande mécanique à l'aide d'une came de commande (21) autour d'un ou deux axes (5) entre une position de saisie et une position de libération et sont maintenus de manière élastique par un accumulateur d'énergie en direction de la position de libération, **caractérisée en ce que** l'accumulateur d'énergie comporte au moins une paire d'aimants permanents (P1, P2) qui se repoussent l'un l'autre sur les bras de saisie (7).

2. Pince de saisie selon la revendication 1, **caractérisée en ce que** les aimants permanents (P1, P2) comportent au moins principalement des terres rares, telles que le néodyme, le samarium ou d'autres éléments similaires.

3. Pince de saisie selon la revendication 1, **caractérisée en ce que** chaque aimant permanent (P1, P2) est encapsulé par un matériau non magnétique, préférablement de l'acier inoxydable.

4. Pince de saisie selon la revendication 1, **caractérisée en ce que**, parmi les aimants permanents (P1, P2) de ladite paire, l'un est chaque fois agencé directement sur un bras de saisie (7) environ à la moitié de la distance entre la zone de saisie (9) et l'axe(5).

5. Pince de saisie selon la revendication 3, **caractérisée en ce que** chaque aimant permanent (P1, P2) présente une forme cylindrique et est logé dans un boîtier d'encapsulation (12) fixé au bras de saisie (7).

6. Pince de saisie selon au moins l'une des revendications 1 à 5, **caractérisée en ce que** la pince de saisie (K2) est commandée par une came de commande (21) qui tourne entre les extensions (7b) des bras de saisie (7) pivotant autour d'axes séparés (5) sur une plaque de support (4) et peut être maintenue en contact avec la came de commande (21) à l'aide des extensions (7b) par la force de répulsion (F1, F2, F3) agissant en direction de la position de libération entre les aimants permanents (P1, P2) agencés sur les bras de saisie (7) entre les zones de saisie (9) et les axes (5).

7. Pince de saisie selon la revendication 6, **caractérisée en ce que** chaque aimant permanent (P1, P2) est cylindrique et est logé dans un boîtier d'encapsulation (12) qui est placé avec un pied de retenue (18) dans un logement (19) sur le côté interne du bras de saisie (7), préférablement au fond d'un renfoncement (20) sur le côté interne du bras de saisie (7).

8. Pince de saisie selon la revendication 7, **caractérisée en ce que** le pied de retenue (18) est agencé de manière ajustable dans le logement (19).

9. Pince de saisie selon la revendication 6, **caractérisée en ce que**, dans la position de saisie de récipient, un premier intervalle (L1) est pourvu entre les aimants permanents (P1, P2), et **en ce que**, dans une position fermée extrême de la pince de saisie (K2) en l'absence d'un récipient (B), un deuxième intervalle (L2) plus petit que le premier intervalle (L1) est pourvu entre les aimants permanents (P1, P2).

10. Pince de saisie selon la revendication 6, **caractérisée en ce que** des coussinets de compensation à ressort de compression (24) et/ou des éléments de compensation à ressort à lame (23) sont pourvus entre les extensions (7b) et la came de commande (21).

11. Pince de saisie selon l'une des revendications 1 à 10, **caractérisée en ce qu'**un bras de saisie (7) peut pivoter, et **en ce que** l'autre bras de saisie (7) et au moins un aimant permanent (P1, P2) sont fixés à une plaque de support (4) d'une structure de support.
